# EUROPÄISCHE PATENTSCHRIFT

(11) **EP 3 269 992 B1**
(45) Veröffentlichungstag und Bekanntmachung des Hinweises auf die Patenterteilung: **23.05.2018**
(21) Anmeldenummer: 17180707.6
(22) Anmeldetag: 11.07.2017
(51) Int. Cl.: F16D 55/226

(54) **SATTELBREMSE**
CALLIPER BRAKE
FREIN À ÉTRIER

(30) Priorität: 13.07.2016 AT 506262016
(43) Veröffentlichungstag der Anmeldung: 17.01.2018
(73) Patentinhaber: VE Vienna Engineering Forschungs- und Entwicklungs GmbH, 1190 Wien (AT)
(72) Erfinder: Putz, Michael, 8272 Sebersdorf (AT)
(74) Vertreter: Patentanwälte Pinter & Weiss OG

(56) Entgegenhaltungen:
- DE-A1- 3 332 548
- DE-A1- 10 004 058
- US-A1- 2008 128 222

## Beschreibung

Die gegenständliche Erfindung betrifft eine Sattelbremse mit einem ortsfesten Bremsenteil und einem beweglichen Bremsenteil, wobei der ortsfeste Bremsenteil und der bewegliche Bremsenteil in der Sattelbremse relativ zueinander bewegbar angeordnet sind und an einem Teil des ortsfesten Bremsenteils oder des beweglichen Bremsenteils ein erster Bremsbelag angeordnet ist und wobei in der Sattelbremse eine Andrückeinrichtung vorgesehen ist, an der ein zweiter Bremsbelag angeordnet und die den zweiten Bremsbelag beim Betätigen der Sattelbremse zum ersten Bremsbelag hin oder vom ersten Bremsbelag wegbewegt, wobei zwischen dem ersten Bremsbelag und dem zweiten Bremsbelag zumindest ein Teil des beweglichen Bremsenteils oder des ortsfesten Bremsenteils angeordnet ist.

Sattelbremsen, vor allem als Scheibenbremse, sind sehr weit verbreitet und finden insbesondere in Fahrzeugen Anwendung. Bei einer Schwimmsattelbremse als bekannte Ausführung einer Sattelbremse wird bekannterweise bei einer Bremsung zumindest ein Bremsbelag mittels einer Andrückeinrichtung zur Bremsscheibe zugestellt. Sobald der Bremsbelag in Kontakt mit der Bremscheibe gerät wird der zweite, gegenüberliegende Bremsbelag durch die wirkenden Reaktionskräfte und der schwimmenden Lagerung des Bremssattels zugestellt, bis beide Bremsbeläge in Kontakt mit der Bremsscheibe sind. Eine andere Ausführung einer Sattelbremse ist die Festsattelbremse mit schwimmender Lagerung der Bremsscheibe. Die Funktion ist aber im Wesentlichen die gleiche, nur dass sich eben beim Zustellen eines Bremsbelages die Bremsscheibe gegen einen zweiten Bremsbelag verschiebt und der Bremssattel dabei fixiert bleibt. Sattelbremsen haben das generelle Problem der Rückstellung der Bremsbeläge nach der Bremsung, da zumindest der Bremsbelag ohne Andrückeinrichtung normalerweise nicht aktiv von der Bremsscheibe abgehoben werden kann. Nur der von der Andrückeinrichtung betätigte Bremsbelag kann aktiv abgehoben werden. Es kommt daher oft vor, dass nach der Bremsung, wenn die Bremsbeläge von der Bremsscheibe abgehoben werden sollten, ein Bremsbelag nicht oder nicht vollständig von der Bremsscheibe abgehoben wird. Damit schleift ein Bremsbelag nach der Bremsung an der Bremsscheibe, was zu erhöhtem Verschleiß (Bremsbelag, Bremsscheibe) und zu Verlusten führt. In einem Fahrzeug können dabei Verlustleistungen von typischerweise 0,1kW bis in den Bereich von einigen kW pro Bremse auftreten. Diese entstehenden Verluste erhöhen auf der anderen Seite natürlich die benötigte Antriebsleistung und, im Falle eines Kraftfahrzeuges damit auch den Kraftstoffverbrauch. Insbesondere bei Elektrofahrzeugen ist ein derartiger Verlust ein großes Problem, da das die Reichweite des Fahrzeugs deutlich reduzieren kann.

Um ein Abheben der beiden Bremsbeläge von der Bremsscheibe nach einer Bremsung zu erzwingen gibt es verschiedene Ansätze im bekannten Stand der Technik. Bei herkömmlichen, hydraulischen Schwimmsattelbremsen werden oftmals die O-Ringe des Hydraulikkolbens verwendet und die Elastizität der O-Ringe genutzt, um den Hydraulikkolben aktiv zurückzuziehen. Das funktioniert allerdings erstens nur auf der Kolbenseite und zweitens nur solange der O-Ring ausreichend elastisch ist, was sich im Laufe der Betriebszeit der Bremse allerdings verschlechtert. Abgesehen davon kann es dabei immer noch vorkommen, dass der Bremsbelag an seinem Anschlag im Bremssattel haftet, oder dass der Bremssattel selbst klemmt, was eine derartige Rückstellung mit dem Ziel des Abhebens beider Bremsbeläge wirkungslos macht. Sattelbremsen, insbesondere in Fahrzeugen, werden in sehr rauen Umgebungen bei verschiedensten Umgebungsbedingungen betrieben, was zu Verschmutzung, Korrosion und anderen Verschleißerscheinungen an Bremsenteilen führt. Das ist auch mit ein Grund, weshalb die beidseitige Rückstellung über die O-Ringe nicht oder nur sehr bedingt funktioniert.

Andere Ansätze zur beidseitigen Rückstellung nutzen Federn oder andere elastische Elemente zur Rückstellung. Ein Beispiel hierfür ist die US 4,193,481 A, bei der eine elastische Hülse verwendet wird, die zwischen Schwimmsattel und dessen Führung wirkt. In der US 4,375,842 A wird wiederum ein Reibring zwischen Hydraulikkolben und Hydraulikzylinder im Bremssattel verwendet. Der Reibring erzwingt beim Lösen der Bremse ein beidseitiges Abheben der Bremsbeläge. Eine ähnliche Lösung kann auch der WO 2010/133463 A1 für eine elektromechanische Reibungsbremse entnommen werden. Auch diese Lösungen haben aber das Problem des nicht immer zuverlässigen Abhebens beider Bremsbeläge nach einer Bremsung.

Dokument US 2008/128222 A1 offenbart eine Sattelbremse nach dem Oberbegriff des Anspruchs 1.

Es ist daher eine Aufgabe der gegenständlichen Erfindung auf einfache Weise ein sicheres Abheben beider Bremsbelage einer Sattelbremse nach dem Lösen der Bremse sicherzustellen.

Diese Aufgabe wird erfindungsgemäß dadurch erreicht, dass ein Koppelungsteil vorgesehen ist, der mit dem beweglichen Bremsenteil und dem ortsfesten Bremsenteil verbunden ist und der den beweglichen Bremsenteil und den ortsfesten Bremsenteil in einer mechanischen Zwangskopplung miteinander verbindet, wobei eine Betätigungseinheit vorgesehen ist, die den Koppelungsteil während zumindest eines Teils der Betätigung der Sattelbremse antreibt, sodass der bewegliche Bremsenteil dabei aufgrund der mechanischen Zwangskoppelung relativ zum ortsfesten Bremsenteil verschoben wird. Durch die mechanische Zwangskoppelung durch den Koppelungsteil wird sichergestellt, dass beim Lösen der Sattelbremse der bewegliche Bremsenteil relativ zum ortsfesten Bremsenteil bewegt wird, wodurch auch der nicht durch die Andrückeinrichtung bewegt erste Bremsbelag zwangsweise von der Bremsscheibe abgehoben wird. Auf diese Weise kann sichergestellt werden, dass beim Lösen der Sattelbremse beide Bremsbeläge sicher von der Bremsscheibe abgehoben werden.

Die erfindungsgemäße Sattelbremse kann als Schwimmsattelbremse ausgeführt sein, mit einem Bremssattel als beweglichen Bremsenteil und einer Bremsscheibe als Teil des ortsfesten Bremsenteils, wobei der Koppelungsteil an einem ortsfesten Teil der Sattelbremse und am Bremssattel angeordnet ist.

In einer Schwimmsattelbremse ist der Bremssattel vorzugsweise in einer Sattelführung verschiebbar gelagert angeordnet. Eine konstruktiv einfache Ausführung ergibt sich dabei, wenn zwischen der Sattelführung und dem Bremssattel ein Verschiebeteil als Teil des ortsfesten Bremsenteils verschiebbar gelagert angeordnet ist und der Koppelungsteil gegebenenfalls am Verschiebeteil angeordnet ist. Der Verschiebeteil ist zwar verschiebbar gelagert, ist aber aufgrund der bei einer Bremsung wirkenden hohen Kräfte, zumindest während des Lösens der Sattelbremse, quasi ortsfest und damit Teil des ortsfesten Bremsenteils. Der Verschiebeteil zentriert sich dabei durch die hohen Kräfte auch selbsttätig beim Betätigen der Schwimmsattelbremse, womit auch allfällige Verschiebungen des Verschiebeteils, z.B. aufgrund eines Verschleißnachstellers, und allfällige Veränderungen der Sattelbremse, z.B. durch Verschleiß, selbsttätig ausgeglichen werden.

Alternativ ist die Sattelbremse als Festsattelbremse mit verschiebbarer Bremsscheibe ausgeführt, mit einem Bremssattel als ortsfesten Bremsenteil und einer Bremsscheibe als Teil des beweglichen Bremsenteils, wobei der Koppelungsteil am beweglichen Teil der Sattelbremse und am Bremssattel angeordnet ist.

In einer bevorzugten, konstruktiv sehr einfache und robusten Ausgestaltung, ist der Koppelungsteil als Betätigungshebel ausgeführt, der an einem ersten Anlenkpunkt an einem Teil des ortsfesten Bremsenteils drehbar gelagert angeordnet ist und der an einem zweiten Anlenkpunkt an einem Teil des beweglichen Bremsenteils drehbar gelagert angeordnet ist. Über den Hebelarm kann auch auf einfache Weise das Ausmaß der Relativbewegung zwischen beweglichen Bremsenteil und ortsfesten Bremsenteil eingestellt werden.

In einer ganz besonders vorteilhaften Ausgestaltung ist der Betätigungshebel an einem dritten Anlenkpunkt an der Andrückeinrichtung als Betätigungseinheit drehbar gelagert angeordnet. Damit dient die Andrückeinrichtung gleichzeitig auch als Betätigungseinheit für den Betätigungshebel. Damit wird keine separate Betätigungseinheit benötigt, was die Konstruktion der Sattelbremse vereinfachen kann.

Der Koppelungsteil kann auch als Kurvengetriebe mit einer Abhebenocke ausgeführt sein, wobei die Abhebenocke über eine Erhebungskurve mit dem beweglichen Bremsenteil zusammenwirkt. Das ergibt ebenfalls eine konstruktiv einfach zu realisierende Ausführung. Darüber hinaus kann durch Gestaltung der Erhebungskurve die Abhebebewegung sehr flexibel gesteuert bzw. eingestellt werden. Auch hier ist es besonders vorteilhaft, wenn die Abhebenock von der Andrückeinrichtung mitangetrieben ist, da dann keine separate Betätigungseinheit benötigt wird.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt
Fig.1 und 2 eine erfindungsgemäße Sattelbremse mit Koppelungsteil in Form einer Schwimmsattelbremse,
Fig.3 und 4 eine erfindungsgemäße Sattelbremse mit Koppelungsteil in Form einer Festsattelbremse mit verschiebbarer Bremsscheibe,
Fig.5 und 6 eine erfindungsgemäße Sattelbremse mit Koppelungsteil in Form einer Schwimmsattelbremse und einem Verschiebeteil,
Fig.7 eine alternative Betätigung des beweglichen Bremsenteil bei einer Festsattelbremse durch den Koppelungsteil und
Flg.8 und 9 jeweils eine Ausführung der erfindungsgemäßen Sattelbremse mit einem Kurvengetriebe als mechanische Zwangskoppelung.

Eine Sattelbremse 1 besteht im Wesentlichen aus einem Bremssattel 2 an dem ein erster Bremsbelag 4 angeordnet, einer Bremsscheibe 3 und einer Andrückeinrichtung 6, an der ein zweiter Bremsbelag 5 angeordnet ist. Die Sattelbremse 1 dient dazu, eine translatorische Bewegung (z.B. bei einer Aufzugsbremse) oder rotatorische Bewegung (z.B. eine Drehbewegung eines Fahrzeugsrades oder eines drehenden Maschinenteils) zu bremsen. Dazu werden die beiden Bremsbeläge 4, 5 gegen die Bremsscheibe 3 gepresst, wodurch eine Bremswirkung (Bremskraft oder Bremsmoment) entsteht. Unter Bremsscheibe 3 wird im Sinne der Erfindung jede Reibfläche verstanden, die mit den Bremsbelägen 4, 5 zum Erzielen einer Bremswirkung zusammenwirkt. Zwischen der Reibfläche und den Bremsbelägen 4, 5 kommt es zu einer Relativbewegung (Rotation, Translation), die durch die Sattelbremse gebremst wird. Grundsätzlich gibt es zwei Typen von Sattelbremsen 1, nämlich eine Schwimmsattelbremse und eine Festsattelbremse.

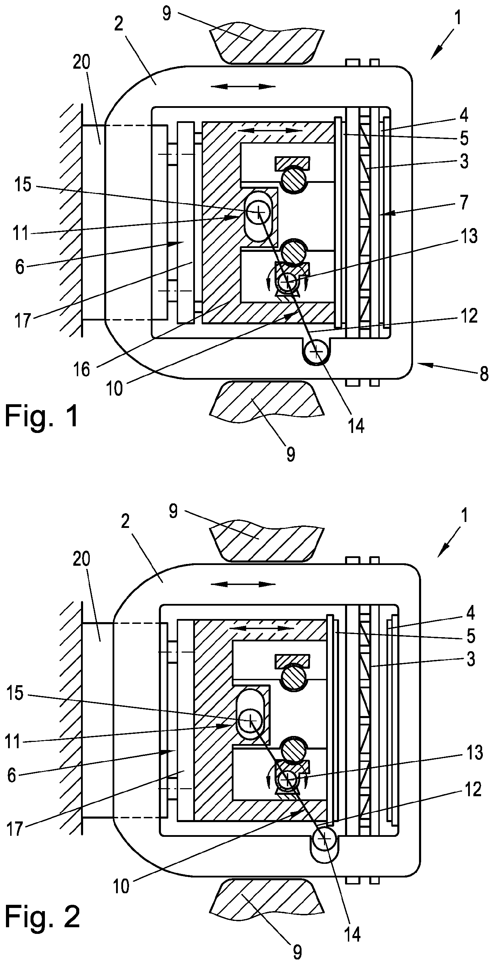

Bei einer Schwimmsattelbremse, wie in den Figuren 1 und 2 dargestellt, ist die Bremsscheibe 3 als Teil des ortsfesten Bremsenteils 7 ortsfest angeordnet und der Bremssattel 2 als beweglicher Bremsenteil 8 beweglich angeordnet. "Ortsfest" bedeutet dabei, dass der ortsfeste Bremsenteil 7 bezogen auf die Vorrichtung, in der die Sattelbremse 1 angeordnet ist, starr gelagert ist. Dabei soll aber natürlich eine Bewegung, die durch die Sattelbremse 1 gebremst werden soll (z.B. Drehbewegung eines Fahrzeugrades oder eine translatorische Bewegung bei einer Aufzugsbremse) nicht gehindert werden. Die Vorrichtung selbst, beispielsweise ein Fahrzeug oder eine Aufzugskabine, kann dabei natürlich bewegt werden. "Beweglich" bedeutet demgemäß, dass der bewegliche Bremsenteil 8 relativ zum ortsfesten Bremsenteil 7 bewegbar ist.

Am Beispiel eines Fahrzeugs als Vorrichtung und einer Sattelbremse 1 an einem Fahrzeugrad wäre der ortsfeste Bremsenteil 7 (Bremsscheibe 3) beispielsweise an einem Radlager unverschiebbar angeordnet, wobei die Drehbewegung des Fahrzeugrades, das drehfest mit der Bremsscheibe 3 (ortsfester Bremsenteil 7) verbunden ist, durch die ortsfeste Lagerung nicht behindert wird. Im Falle einer Schwimmsattelbremse ist der Bremssattel 2 der bewegliche Bremsenteil 8, der beispielsweise quer zur Drehrichtung der Bremsscheibe 3 in einer Sattelführung 9 verschiebbar gelagert angeordnet ist. Die Sattelführung 9 erlaubt die Querbewegung des Bremssattels 2 und verhindert gleichzeitig, dass der Bremssattel 2 beim Bremsen durch die auftretenden Reibungskräfte mit der drehenden Bremsscheibe 3 mitbewegt wird.

Bei einer Schwimmsattelbremse wird demnach in bekannter Weise durch die Andrückeinrichtung 6 der Sattelbremse 1 der zweite Bremsbelag 5 auf der Andrückeinrichtung 6 gegen die Bremsscheibe 3 (ortsfester Bremsenteil 7) gedrückt. Durch die entstehenden Reaktionskräfte verschiebt sich der Bremssattel 2 (beweglicher Bremsenteil 8) mit dem daran angeordneten ersten Bremsbelag 4 in der Sattelführung 9 bis beide Bremsbeläge 4, 5 an der Bremsscheibe 3 anliegen und bei weiterer Betätigung eine Bremswirkung (Bremskraft, Bremsmoment) erzeugt wird. Die Bremsscheibe 3, die die Reibfläche ausbildet, als Teil des ortsfesten Bremsenteils 7 ist dabei zwischen den beiden Bremsbelägen 4, 5 angeordnet.

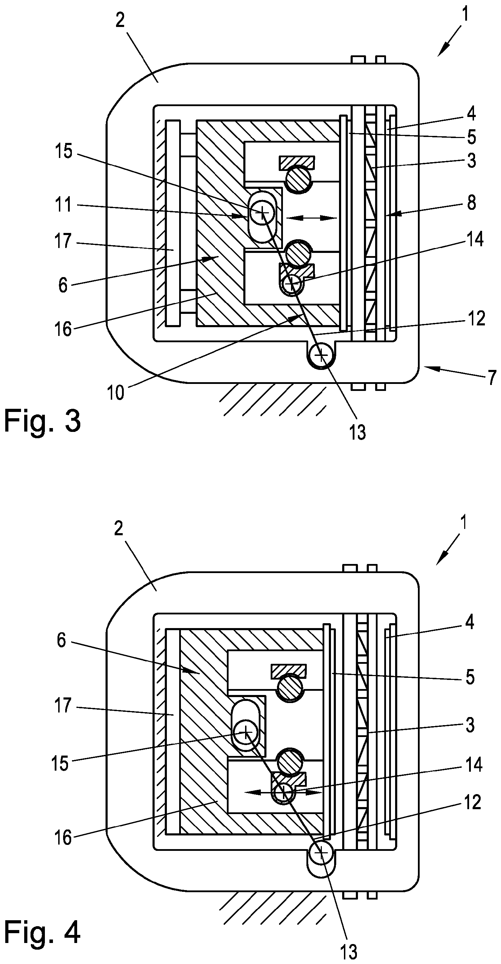

Bei einer Festsattelbremse mit verschiebbarer Bremsscheibe 3, wie in den Figuren 3 und 4 dargestellt, ist es genau umgekehrt. Hier ist der Bremssattel 2 der ortsfeste Bremsenteil 7 und die Bremsscheibe 3, die in der Sattelbremse 1 verschiebbar gelagert angeordnet ist, bildet einen Teil des beweglichen Bremsenteils 8. Die obigen Ausführungen gelten dabei analog. Beim Betätigen der Festsattelbremse wird der zweite Bremsbelag 5 mit der Andrückeinrichtung 6 gegen die Bremsscheibe 3 (beweglicher Bremsenteil) gedrückt. Dabei verschiebt sich die Bremsscheibe 3 in Richtung zum ortsfesten Bremssattel 2 und dem daran angeordneten ersten Bremsbelag 4 bis beide Bremsbeläge 4, 5 in Kontakt mit der Bremsscheibe 3 sind und bei weiterem Andrücken die gewünschte Bremswirkung erzielt wird. Die Bremsscheibe 3, die die Reibfläche ausbildet, als Teil des beweglichen Bremsenteils 8 ist dabei zwischen den beiden Bremsbelägen 4, 5 angeordnet.

Die Andrückeinrichtung 6 umfasst einen beweglichen Halteteil 16 an dem der zweite Bremsbelag 5 angeordnet ist. Der Halteteil 16 kann durch einen Andrückantrieb 17 der Andrückeinrichtung 6 angetrieben und bewegt werden, insbesondere zur Bremsscheibe 3 hin oder wegbewegt werden. Grundsätzlich kann ein beliebiger Andrückantrieb 17 vorgesehen sein. Gängige Andrückantriebe 17 sind hydraulische, pneumatische oder elektromechanische Antriebe, die den beweglich gelagerten Halteteil 16 mit dem zweiten Bremsbelag 5 bewegen. Die Andrückeinrichtung 6 ist hierbei an einem ortsfesten Bauteil abgestützt, beispielsweise am ortsfesten Bremsenteil 7 oder an einen Teil der Vorrichtung, in dem die Sattelbremse 1 eingesetzt wird, beispielsweise eine Radaufhängung eines Fahrzeugs oder eine Kabine eines Aufzugs. Ebenso ist es bekannt, dass die Andrückeinrichtung 6 an einem Verschleißnachsteller 20 angeordnet sein kann, der dann z.B. an einem ortsfesten Bauteil der Vorrichtung angeordnet ist, wie z.B. in Fig.1 angedeutet. Mit dem Verschleißnachsteller 20 kann in bekannter Weise der Luftspalt L zwischen abgehobenen Bremsbelag 5 und der Bremsscheibe 3 eingestellt werden, um den Verschleiß der Bremsbeläge 4, 5 auszugleichen.

Die Konstruktion und Funktion solcher Sattelbremsen 1 ist an sich hinlänglich bekannt, sodass hier nicht weiter darauf eingegangen wird. Aus der WO 2010/133463 A1 kann beispielsweise eine elektromechanische Schwimmsattelbremse 1 entnommen werden, die sich ganz besonders für die gegenständliche Erfindung eignet

Beim Betätigen der Sattelbremse 1 werden in bekannter Weise wie oben beschrieben die beiden Bremsbeläge 4, 5 mit der Andrückeinrichtung 6 gegen die Bremsscheibe 3 gedrückt, wodurch durch die aufgebrachte Andrückkraft eine Bremswirkung erzeugt wird, z.B. in Form eines Bremsmomentes. Beim Lösen (als Teil der Betätigungsbewegung) der Sattelbremse 1 hebt die Andrückeinrichtung 6 den daran angeordneten zweiten Bremsbelag 5 von der Bremsscheibe 3 ab. Ein grundlegendes bekanntes Problem einer Sattelbremse 1 besteht darin, dass der erste Bremsbelag 4 beim Lösen der Sattelbremse 1 unter Umständen nicht oder nicht zur Gänze von der Bremsscheibe 3 abgehoben wird, sondern nur der aktiv bewegte zweite Bremsbelag 5. Aufgrund des aufrecht bleibenden Kontakts zwischen erstem Bremsbelag 4 und Bremsscheibe 3 entsteht zum Einen im an sich bremsfreien Zustand ein Verlust, der vom Antrieb der gebremsten Vorrichtung (z.B. ein Fahrzeug) aufgebracht werden muss. Diese Verluste führen zu einem unerwünschten erhöhten Verbrauch des Antriebs (z.B. Treibstoff oder elektrische Energie). Zum Anderen wird dadurch natürlich auch der Verschleiß von Bremsscheibe 3 und erstem Bremsbelag 4 erhöht, was ebenfalls unerwünscht ist.

Um dem entgegenzuwirken ist erfindungsgemäß ein Koppelungsteil 10 vorgesehen, der mit dem beweglichen Bremsenteil 8 und dem ortsfesten Bremsenteil 7 verbunden ist und der den beweglichen Bremsenteil 8 und den ortsfesten Bremsenteil 7 in einer mechanischen Zwangskopplung miteinander verbindet. Die mechanische Zwangskoppelung sorgt dafür, dass der bewegliche Bremsenteil 8 relativ zum ortsfesten Bremsenteil 7 bewegt wird, wenn der Koppelungsteil 10 bewegt wird. Dazu ist eine Betätigungseinheit 11 vorgesehen, die den Koppelungsteil 10 zumindest teilweise während des Lösens der Sattelbremse 1 antreibt. Die Betätigungseinheit 11 zum Bewegen des Koppelungsteils 10 kann dabei beliebig ausgeführt werden. Vorteilhafterweise wird zur Betätigung des Koppelungsteils 10 die von der Andrückeinrichtung 6 ohnehin aufgebrachte Andrückbewegung genutzt, um gleichzeitig den Koppelungsteil 10 zu bewegen. "Mechanische Zwangskoppelung" bedeutet daher, dass der bewegliche Bremsenteil 8 relativ zum ortsfesten Bremsenteil 7 bewegt wird, wenn der Koppelungsteil 10 durch die Betätigungseinheit 11 angetrieben wird. Diese Relativbewegung kann, zumindest teilweise, unabhängig von der Bewegung der Andrückeinrichtung 6, bzw. des Halteteils 16, erfolgen. Die Zwangskoppelung kann natürlich auf jene Richtung oder Bewegung beschränkt sein, die zum wünschenswerten Abheben des ersten Bremsbelages 4 führt.

Der Koppelungsteil 10 muss auch nicht immer genau jene Bewegung erzeugen, die auch während der Zuspannung oder Lösung der Reibungsbremse 1 entsteht. Unsymmetrien und Differenzen zwischen diesen Bewegungen können ausgeglichen werden, z.B. durch Federwirkungen, leichtes Verschieben des Verschiebeteils 21 (siehe weiter unten) oder Spiel. Der Koppelungsteil 10 kann die Bewegungen wie auch immer erzeugen, z.B. auch über Erhebungskurven (z.B. Nocken) und eventuell Verbindungselementen, die die Bewegung auf den Erhebungskurven weiterleiten.

Im Ausführungsbeispiel nach Fig.1, also am Beispiel einer Schwimmsattelbremse als Sattelbremse 1, ist der Koppelungsteil 10 als Betätigungshebel 12 ausgeführt, der sowohl am ortsfesten Bremsenteil 7 als auch am beweglichen Bremsenteil 8 drehbar gelagert ist. Der Anlenkpunkt 13 des Hebels 12 am ortsfesten Bremsenteil 7 ist dabei natürlich ebenfalls ortsfest gehalten und ermöglicht vorzugsweise lediglich ein Verschwenken des Hebels 12 um diesen Anlenkpunkt 13. Der ortsfeste Bremsenteil 7 umfasst beispielsweise bei einer Fahrzeugbremse das Radlager, die Radnabe und die damit drehfest verbundene Bremsscheibe 3, wie in Fig.1 angedeutet. Der Betätigungshebel 12 ist an einem zweiten Anlenkpunkt 14 am Bremssattel 2 als beweglichen Bremsenteil 8 drehbar gelagert angelenkt. Der Betätigungshebel 12 ist damit ein starrer Bauteil zwischen den beiden Anlenkpunkten 13, 14. Wird der Betätigungshebel 12 um den ersten ortsfesten Anlenkpunkt 13 am ortsfesten Bremsenteil 7 verschwenkt, verschiebt sich durch die mechanische Zwangskoppelung der Bremssattel 2, also der bewegliche Bremsenteil 8 relativ zum ortsfesten Bremsenteil 7. Dabei wird der Bremssattel 2 mit dem ersten Bremsbelag 4 je nach Richtung der Schwenkbewegung zur Bremsscheibe 3 hin oder wegbewegt. Beim Lösen der Sattelbremse 1 treibt die Betätigungseinheit 11 den Koppelungsteil 10 an, um diesen zu Verschwenken und um damit den ersten Bremsbelag 4 zwangsweise von der Bremsscheibe 3 abzuheben. Nachdem der zweite Bremsbelag 5 von der Andrückeinrichtung 6 abgehoben wird, kann ein vollständiges Abheben beider Bremsbeläge 4, 5 sichergestellt werden.

Im Ausführungsbeispiel nach Fig.1 erstreckt sich der Betätigungshebel 12 als Koppelungsteil 10 über den ersten Anlenkpunkt 13 hinaus. Das dadurch ausgebildete, dem zweiten Anlenkpunkt 14 gegenüberliegende Ende des Betätigungshebels 12 ist an der Andrückeinrichtung 6 in einem weiteren Anlenkpunkt 15 drehbar gelagert angeordnet. Der erste Anlenkpunkt 13 am ortsfesten Bremsenteil 7 liegt damit zwischen den beiden äußeren Anlenkpunkten 14, 15. Wird die Andrückeinrichtung 6 für eine Bremsung betätigt, also zur Bremsscheibe 3 hinbewegt, wird gleichzeitig auch der Betätigungshebel 12 um den ersten Anlenkpunkt 13 verschwenkt, wodurch der Bremssattel 2 mit dem ersten Bremsbelag 4 ebenfalls in Richtung der Bremsscheibe 3 bewegt wird, was zu einer Zentrierung des Bremssattels 2 führt. Damit wird auch die Bremsung unterstützt, da der volle Kontakt beider Bremsbeläge 4, 5 mit der Bremsscheibe 3 früher erreicht wird (Fig.1). Beim Lösen der Sattelbremse 1 wird die Andrückeinrichtung 6 von der Bremsscheibe 3 wegbewegt, wodurch der Betätigungshebel 12 nun in die andere Richtung um den ersten Anlenkpunkt 13 verschwenkt wird. Dadurch wird aber gleichzeitig der Bremssattel 2 mit dem ersten Bremsbelag 4 durch den Betätigungshebel 12 zwangsweise von der Bremsscheibe 3 abgehoben (Fig.2). Obwohl es an sich eine Selbstverständlichkeit ist und in Fig.1 und Fig.2 auch angedeutet ist, müssen der Anlenkpunkt 14 am Bremssattel 2 und der Anlenkpunkt 15 an der Andrückeinrichtung 6 gegebenenfalls auch eine translatorische Bewegung des Hebels 10 ermöglichen, was beispielsweise durch eine Lagerung in einem Langloch ermöglicht wird. In dieser vorteilhaften Ausgestaltung bildet die Andrückeinrichtung 6 somit gleichzeitig auch die Betätigungseinheit 11 für den Koppelungsteil 10 aus und der Betätigungshebel 12 kann dabei sowohl beim Betätigen, als auch beim Lösen der Sattelbremse 1 betätigt werden.

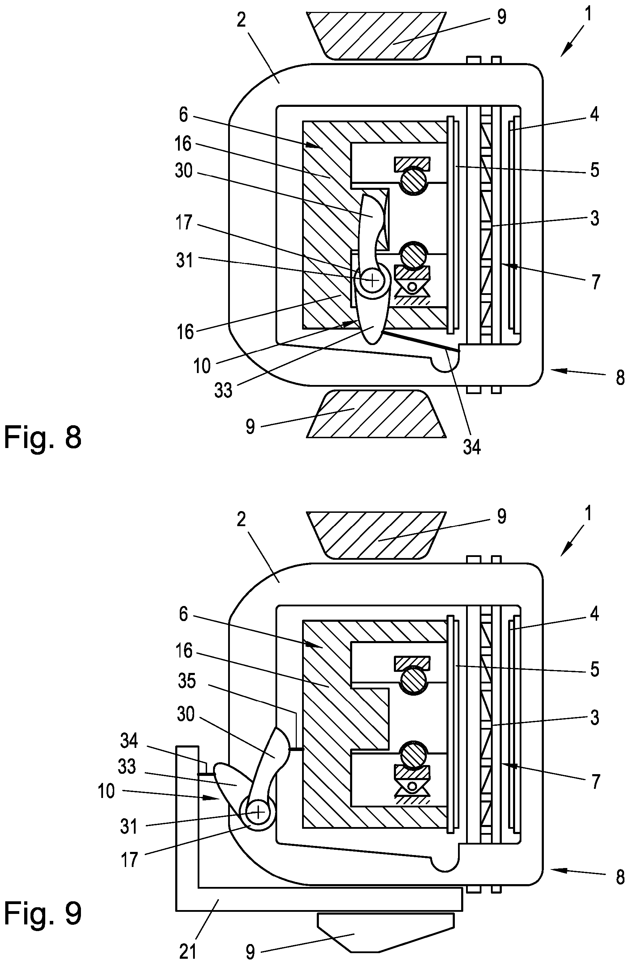

Anstelle eines Hebels 12 sind natürlich auch andere mechanische Zwangskoppelungen zur Realisierung des Koppelungsteils 10 denkbar. Beispielsweise könnte ein Zahn- oder Reibradradgetriebe als Koppelungsteil 10 angedacht werden. Dazu könnte ein erstes durch die Betätigungseinheit 11 angetriebenes Zahnrad im ersten ortsfesten Anlenkpunkt 13 gelagert sein und in eine Zahnstange am Bremssattel 2 eingreifen. Das erste Zahnrad könnte dabei durch ein an der Andrückeinrichtung 6 angeordnetes zweites Zahnrad angetrieben werden, um wieder die Andrückbewegung für die Betätigung des Koppelungsteils 10 zu nutzen. Auch ein Koppelgetriebe oder Kurvengetriebe als Koppelungsteil 10 wäre denkbar. Ein Beispiel dafür wird nachfolgend anhand der Fig.8 am Beispiel einer Sattelbremse 1 mit Schwimmsattel beschrieben.

In Fig.8 umfasst die Andrückeinrichtung 6 eine drehbar gelagerte und angetriebene (z.B. mit einem Elektromotor als Andrückantrieb 17) Antriebsnocke 30. Die Antriebsnocke 30 wirkt mit ihrer Erhebungskurve (Kurvengetriebe) mit einem beweglichen Halteteil 32 zusammen, an dem der zweiten Bremsbelag 5 angeordnet ist. Die Erhebungskurve rollte dabei an einer Fläche des Halteteiles 32 ab, der damit entsprechend der Erhebungskurve bewegt wird, vorzugsweise zur Bremsscheibe 3 hin oder weg bewegt wird. Die Bewegung von der Bremsscheibe 3 weg kann auch durch eine Rückstellfeder bewirkt werden. Der Drehpunkt 31 der Antriebsnocke 30 ist dabei in der Sattelbremse 1 gelagert, beispielsweise an einem ortsfesten Bremsenteil. Der Halteteil 32 mit dem zweiten Bremsbelag 5 kann damit relativ zum Drehpunkt 31 bewegt werden. Es ist weiters eine Abhebenocke 33 vorgesehen, die bevorzugt ebenfalls vom Andrückantrieb 17 der Antriebsnocke 30 angetrieben wird, sodass die Betätigungseinheit 11 wieder vom Andrückantrieb 17 ausgebildet ist. Die Abhebenocke 33 kann aber natürlich wieder eine separate, vom Andrückantrieb 17 unabhängige Betätigungseinheit 11 ausweisen. Die Abhebenocke 33 wirkt mit ihrer Erhebungskurve mit dem Bremssattel 2, also dem beweglichen Bremsenteil 8 zusammen. Im Ausführungsbeispiel nach Fig.8 wirkt die Erhebungskurve auf einem Stößel 34, der am Bremssattel 2 angreift. Die Antriebsnocke 30 kann aber natürlich auch direkt auf den Bremssattel 2 wirken. Es entsteht damit durch die Abhebenocke 33 wieder eine mechanische Zwangskoppelung zwischen dem beweglichen Bremsenteil 8 und dem ortsfesten Bremsenteil 7. Die Abhebenocke 33, gegebenenfalls mit Stößel 34, bildet somit den Koppelungsteil 10 aus. Beim Betätigen der Sattelbremse 1 wird der Halteteil 32 mit dem zweiten Bremsbelag 5 durch Verdrehen der Antriebsnocke 30 zur Bremsscheibe 3 bewegt. Gleichzeitig wird die Abhebenocke 33 beim Betätigen von der Bremsscheibe 3 weggedreht. Hierbei könnte vorgesehen sein, dass die Abhebenocke 33 bei dieser Bewegung den Bremssattel 2 mitnimmt, womit auch gleichzeitig der erste Bremsbelag 4 zur Bremsscheibe 3 zugestellt werden könnte. Beim Lösen der Sattelbremse 1 wird die Drehrichtung der Nocken umgekehrt. Dabei wirkt die Abhebenocke 33, direkt oder über ein Stößel 34, auf den Bremssattel 2 und bewirkt durch die mechanische Zwangskoppelung, dass der Bremssattel 2 mit dem ersten Bremsbelag 4 verschoben wird, sodass der erste Bremsbelag 4 zwangsweise von der Bremsscheibe 3 abgehoben wird. Selbstverständlich kann ein solches Kurvengetriebe analog auch bei einer Sattelbremse 1 mit verschiebbarer Bremsscheibe 3 eingesetzt werden.

Auch bei einer Festsattelbremse mit verschiebbarer Bremsscheibe 3, wie in Fig.3 dargestellt, kann ein Koppelungsteil 10 in analoger Weise verwendet werden, um die beiden Bremsbeläge 4, 5 von der Bremsscheibe 3 zwangsweise abzuheben. In einer vorteilhaften Ausgestaltung ist der Koppelungsteil 10 wieder als Betätigungshebel 12 ausgeführt, der in einem ersten Anlenkpunkt 13 am ortsfesten Bremsenteil 7, hier am Bremssattel 2, drehbar gelagert ist. Der Betätigungshebel 12 ist in einem zweiten Anlenkpunkt 14 am beweglichen Bremsenteil 8, hier die verschiebbare Bremsscheibe 3 bzw. an der verschiebbaren Lagerung der verschiebbaren Bremsscheibe 3, drehbar gelagert. Ein Verschwenken des Hebels 12 mittels der Betätigungseinheit 11 führt durch die mechanische Zwangskoppelung wieder dazu, dass die verschiebbare Lagerung mit der Bremsscheibe 3 mit dem Betätigungshebel 12 mitbewegt wird. Das kann dazu genutzt werden, die Bremsscheibe 3 beim Lösen der Sattelbremse 1 vom ersten Bremsbelag 4 am Bremssattel 2 abzuheben (Fig.4).

Hierbei ist es wieder vorteilhaft, die Andrückbewegung der Andrückeinrichtung 6 für die Betätigung des Koppelungsteils 10 zu nutzen, wie in Fig.3 dargestellt. Hierzu ist der Betätigungshebel 12 wieder mit einem Ende in der Andrückeinrichtung 6 drehbar gelagert. Wird die Andrückeinrichtung 6 von der Bremsscheibe 3 wegbewegt, wird gleichzeitig der Betätigungshebel 12 verschwenkt, wodurch auch die Bremsscheibe 3 vom Bremssattel 2 wegbewegt wird. Beim Betätigen der Sattelbremse 1 wird die Andrückeinrichtung 6 zur Bremsscheibe 3 hinbewegt, wodurch gleichzeitig auch die Bremsscheibe 3 zentriert wird und die Bremsung unterstützt wird.

Auch hier kann die Betätigungseinheit 11 grundsätzlich beliebig ausgeführt sein und muss nicht notwendigerweise durch die Andrückeinrichtung 6 gebildet werden. Ebenso kann der Koppelungsteil 10 auch anders ausgeführt sein, beispielsweise wieder als Zahnrad-, Reibrad-, Kurven- oder Koppelgetriebe.

Im Idealfall sind die beiden Bremsbeläge 4, 5 vor Beginn der Bremsung vollständig von der Bremsscheibe 3 abgehoben, wie in Fig.3 und 4 dargestellt, sodass dazwischen ein gewünschter Luftspalt, der auf beiden Seiten nicht unbedingt gleich sei muss, vorhanden ist. Wie bereits erwähnt kann ein Verschleißnachsteller 20 vorgesehen sein, um den Luftspalt innerhalb eines definierten Bereichs zu halten und/oder die Bremse in einem günstigen Arbeitsbereich zur Erreichung gewünschter Bremswirkungen zu betreiben. Konstruktionsbedingt kommt es bei einer Schwimmsattelbremse zu einem Kontakt zwischen dem als Schwimmsattel ausgeführten Bremssattel 2 und der Sattelführung 9 und/oder zwischen einem Bremsbelag 4, 5 und einem Anschlag für den Bremsbelag 4, 5 im Schwimmsattel 2. Bei Verschmutzung, Korrosion oder anderen möglichen Beschädigungen kann es vorkommen, dass der Bremssattel 2 in der Sattelführung 9 klemmt und/oder dass ein Bremsbelag 4, 5 im Bremssattel 2 klemmt oder an der Bremsscheibe 3 haftet. Aufgrund der mechanischen Zwangskoppelung durch den Koppelungsteil 10 können solche Situation verhindert werden und auch in diesen Fälle ein sicheres Abheben der beiden Bremsbeläge 4, 5 von der Bremsscheibe sichergestellt werden.

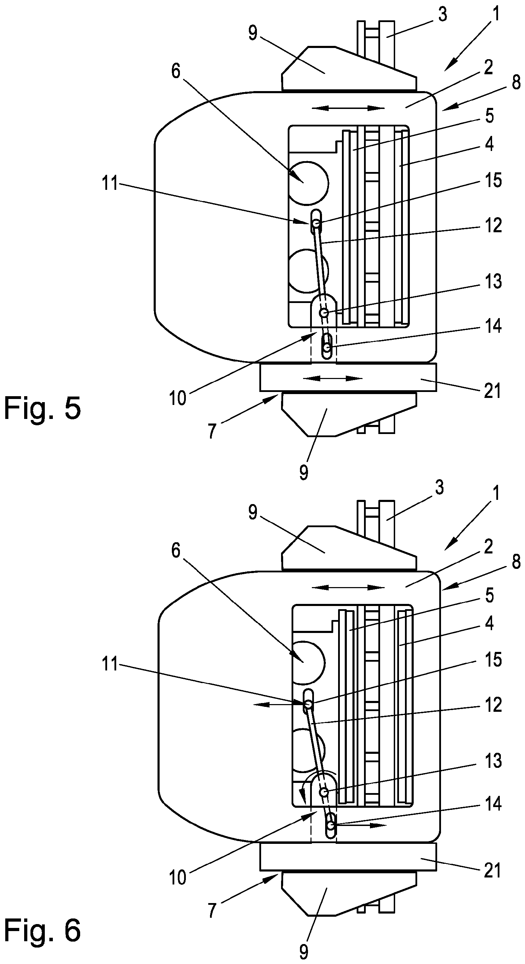

Mit Bezugnahme auf die Figuren 5 und 6 ist eine weitere vorteilhafte Ausgestaltung einer erfindungsgemäßen Sattelbremse 1 in Form einer Schwimmsattelbremse beschrieben. Die Lagerung des Koppelungsteils 10 an einem ortsfesten Bauteil der Vorrichtung, in dem die Sattelbremse verwendet wird, ist konstruktiv aufgrund der oftmals sehr engen Platzverhältnisse in einer Sattelbremse 1 nicht immer einfach umzusetzen. Um dieses Problem zu beheben ist ein Verschiebeteil 21 angeordnet. Aus Gründen der Übersichtlichkeit sind in den Figuren 5 und 6 Bauteile, die für die Erklärung der Funktion und Wirkung des Verschiebeteils 21 nicht unbedingt benötigt werden nicht mehr eingezeichnet.

Das Verschiebeteil 21 ist dabei zwischen der Sattelführung 9 und dem Bremssattel 2 (beweglicher Bremsenteil 8) angeordnet, sodass sich der Bremssattel 2 nun am Verschiebeteil 21 abstützen kann und an diesem geführt ist. Das Verschiebeteil 21 verhindert damit, dass der Bremssattel 2 beim Bremsen aufgrund der Reibungskräfte in Bewegungsrichtung der Relativbewegung zwischen Bremsscheibe 3 und den Bremsbelägen 4, 5 mitbewegt wird. Das Verschiebeteil 21 stützt sich wiederum an der Sattelführung 9 ab und ist an dieser geführt. Das Verschiebeteil 21 ist in Richtung der Bewegung des Bremssattels 2 beweglich zwischen Bremssattel 2 und Sattelführung 6 angeordnet, wie durch den Doppelpfeil angedeutet. Aufgrund der bei einer Bremsung sehr hohen wirkenden Kräfte (Andrückkraft durch Andrückeinrichtung 6, Abstützkraft des Bremssattels 2 am Verschiebeteil 21, entstehende Reibungskräfte zwischen den Bauteilen) ist das Verschiebeteil 21 bei einer Bremsung quasi ortsfest gehalten und damit Teil des ortsfesten Bremsenteils 7.

Zwischen dem Verschiebeteil 21 (ortsfester Bremsenteil 7) und dem beweglichen Bremsenteil 8 ist wiederum der Koppelungsteil 10 angeordnet, der den beweglichen Bremsenteil 8 und den ortsfesten Bremsenteil 7 in einer mechanischen Zwangskoppelung verbindet. Im dargestellten Ausführungsbeispiel ist der Koppelungsteil 10 wiederum als Betätigungshebel 12 ausgeführt. Dazu ist am Verschiebeteil 21 ein Anlenkpunkt 13 für den starren Betätigungshebels 12 vorgesehen, an dem der Betätigungshebel 12 drehbar gelagert angeordnet ist. Ein erstes Ende des Betätigungshebels 12 ist an einem ersten Drehlager 14 drehbar am beweglichen Bremsenteil 8 (Bremssattel 2) gelagert angeordnet. Der Betätigungshebel 12 wird wiederum durch eine Betätigungseinheit 11 verschwenkt, wie oben beschrieben. Ebenso ist es wiederum vorteilhaft, wenn die Andrückeinrichtung 6 gleichzeitig als Betätigungseinheit 11 ausgeführt ist. In diesem Fall kann das gegenüberliegende zweite Ende des Betätigungshebels 12 in einem Anlenkpunkt 15 an der Andrückeinrichtung 6 drehbar gelagert angeordnet sein, so wie oben beschrieben.

In Fig.5 ist die betätigte Sattelbremse 1 dargestellt. Wird die Sattelbremse 1 nun durch Abheben des beweglichen Bremsbelages 5 mittels der Andrückeinrichtung 6 gelöst (angedeutet durch den Pfeil in Fig.6), wird der Betätigungshebel 12 um den Anlenkpunkt 13 verdreht. Nachdem das Verschiebeteil 21 an der Sattelführung 6 anliegt und dieses aufgrund der durch die auftretenden Kräfte wirkenden Haftreibung festgehalten wird, wird durch die mechanische Zwangskoppelung gleichzeitig auch der Bremssattel 2 in die entgegengesetzte Richtung bewegt (angedeutet durch den Pfeil in Fig.6). Das führt wiederum dazu, dass der fest am Bremssattel 2 befestigte Bremsbelag 4 ebenfalls von der Bremsscheibe 3 abgehoben wird. Auf diese Weise kann ein beidseitiges Abheben der Bremsbeläge 4, 5 erzwungen werden.

Bei einer Bremsung mit der Sattelbremse 1 mit Verschiebeteil 21, wenn als der zweite bewegliche Bremsbelag 5 mit der Andrückeinrichtung 6 zur Bremsscheibe 3 bewegt wird, zentriert sich der Bremssattel 2 durch die auftretenden Reaktionskräfte wie oben beschrieben. Aufgrund der bei der Bremsung auftretenden hohen Kräfte in der Sattelbremse 1 und der mechanischen Zwangskoppelung zwischen dem Verschiebeteil 21 und dem Bremssattel 2 zentriert sich dabei auch gleichzeitig das Verschiebeteil 21. Damit hat das Verschiebeteil 21 beim Lösen der Sattelbremse 1 immer die optimale Position, um beide Bremsbeläge 4, 5 sicher von der Bremsscheibe abzuheben. Damit gleichen sich auch automatisch allfällige Verschiebungen des Verschiebeteils 21 im gelösten Zustand der Sattelbremse 1 aus, ebenso wie sich verändernde Verhältnisse in der Sattelbremse 1 (beispielsweise durch Verschleiß hervorgerufen) ausgeglichen werden. Solche Verschiebungen können beispielsweise durch einen Verschleißnachsteller 20, an dem die Andrückeinrichtung 6 angeordnet ist (siehe Fig.1), hervorgerufen werden.

Vorteilhaft ist es, wenn der Verschiebeteil 21 an beiden Seiten des Bremssattels 2 zwischen Sattelführung 9 und Bremssattel 2 angeordnet ist 2.

Ein Verschiebeteil 21 könnte auch an beliebiger anderer Stelle angeordnet sein. Wesentlich ist, dass er bei Betätigung der Sattelbremse 1 wie beschrieben zentriert wird und von dieser zentrierten Position aus das Abheben des ersten Bremsbelags 4 durchführt, in dem der Verschiebeteil 21 genügend Haftreibung zu einer ortsfesten Position hat.

In Fig.9 ist, analog zu Fig.8, ein Ausführungsbeispiel einer Sattelbremse 1 mit Schwimmsattel 2 und Verschiebeblech 21 mit einem Kurvengetriebe zur mechanischen Zwangskoppelung dargestellt. In diesem Beispiel wirkt die Antriebsnocke 30 ebenfalls über einen Antriebsstößel 35 auf den Halteteil 32. Der Drehpunkt 31 der Abhebenocke 33 ist hier am Bremssattel 2 (beweglicher Bremsenteil 8) angeordnet. Die Abhebenocke 33 wirkt damit zwischen dem Verschiebeblech 21 (ortsfester Bremsenteil 7) und dem Bremssattel 2 (beweglicher Bremsenteil 8) und bildet wieder den Koppelungsteil 10 aus. Die Abhebenocke 33 wird hier vom Andrückantrieb 17 der Antriebsnocke 30 angetrieben.

In Fig.3 und 4 ist die verschiebbare Bremsscheibe 3 durch ein Verschiebelager realisiert, d.h. die Lagerung der Bremsscheibe 3, und damit auch die Bremsscheibe 3 selbst, wird durch die mechanische Zwangskoppelung durch den Koppelungsteil 10 verschoben. Hierbei sind aber natürlich auch andere Ausführungen denkbar.

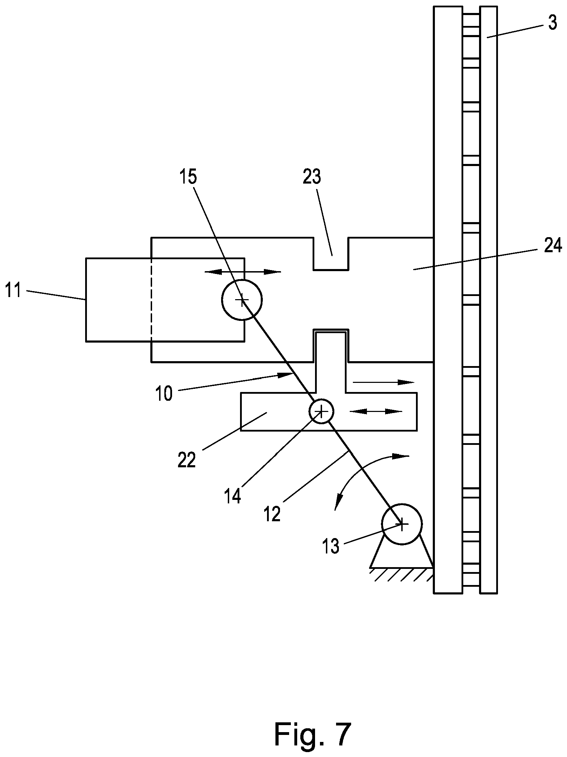

In Fig.7 (Bremssattel 2 und Andrückeinrichtung 6 der Einfachheit nicht dargestellt) greift beispielsweise ein Betätigungsteil 22 in eine Verschiebenut 23 der Bremsscheibenwelle 24 ein. Der Betätigungsteil 22 wird durch die Bewegung des Koppelungsteils 10, der wiederum von der Betätigungseinheit 11 angetrieben wird, bewegt. Die Bremsscheibenwelle 24, an der die Bremsscheibe 3 drehfest angeordnet ist, ist wiederum verschiebbar gelagert. Durch Verschieben des Betätigungsteils 22 wird damit die Bremsscheibenwelle 24 mit der Bremsscheibe 3 verschoben wie durch den Doppelpfeil angedeutet. Der Koppelungsteil 10 ist dabei wieder als Betätigungshebel 12 ausgeführt, der an einem Anlenkpunkt 13 am ortsfesten Bremsenteil 7 (Bremssattel 2, nicht dargestellt) gelagert ist und mit einem weiteren Anlenkpunkt 14 am beweglichen Bremsenteil 8 (Bremsscheibenwelle 24 mit der Bremsscheibe 3) gelagert ist.

Wo und wie der Betätigungsteil 22 an der Bremsscheibenwelle 24 angreift ist dabei unerheblich. Insbesondere kann der Betätigungsteil 22 auch an einer Stirnseite der Bremsscheibenwelle 24 angreifen. Damit ist es auch unerheblich, ob der Betätigungsteil 22 die Bremsscheibenwelle 24 mit der Bremsscheibe 3 zum Verschieben schiebt oder zieht. Es muss aber nicht unbedingt ein Verschiebelager oder eine Verschiebenut 23 ausgebildet sein. Es können auch drehende Teile zum Verschieben berührt werden, also insbesondere auch die Bremsscheibe 3, wobei natürlich ein Entfernen der Berührung drehender Teile nach dem Verschiebevorgang vorteilhaft ist.

Der Bremssattel kann natürlich allgemein auch als Zusammenspannteil der Reibflächen gesehen werden, womit die Erfindung gleichermaßen auch auf Mehrscheiben- und Lamellenbremsen anwendbar ist, wobei die Anzahl der Reibflächen beliebig sein kann. Die Reibflächen müssen auch nicht scheibenförmig sein, sondern können jede sinnvolle Geometrie haben, also z.B. auch gerade oder gekrümmte Flächen. Gebremst werden können sowohl Fahrzeuge aller Art, als auch Maschinen, Geräte, Propeller, Hebevorrichtungen, usw. Sogar auf Innen- oder Außenbackenbremsen lässt sich die Erfindung anwenden, indem der Backenträger (der dann dem Bremssattel gleichzusetzen ist) patentgemäß so ausgeführt wird, dass beide Backen in der gewünschten Bewegung abgehoben werden.

## Patentansprüche

1. Sattelbremse mit einem ortsfesten Bremsenteil (7) und einem beweglichen Bremsenteil (8), wobei der ortsfeste Bremsenteil (7) und der bewegliche Bremsenteil (8) in der Sattelbremse (1) relativ zueinander bewegbar angeordnet sind und an einem Teil des ortsfesten Bremsenteils (7) oder des beweglichen Bremsenteils (8) ein erster Bremsbelag (4) angeordnet ist und wobei in der Sattelbremse (1) eine Andrückeinrichtung (6) vorgesehen ist, an der ein zweiter Bremsbelag (5) vorgesehen ist und die den zweiten Bremsbelag (5) beim Betätigen der Sattelbremse (1) zum ersten Bremsbelag (4) hin oder vom ersten Bremsbelag (4) wegbewegt, wobei zwischen dem ersten Bremsbelag (4) und dem zweiten Bremsbelag (5) zumindest ein Teil des beweglichen Bremsenteils (8) oder des ortsfesten Bremsenteils (7) angeordnet ist, wobei ein Koppelungsteil (10) vorgesehen ist, der mit dem beweglichen Bremsenteil (8) verbunden ist, **dadurch gekennzeichnet, dass** der Koppelungsteil (10) mit dem ortsfesten Bremsenteil (7) verbunden ist und der den beweglichen Bremsenteil (8) und den ortsfesten Bremsenteil (7) in einer mechanischen Zwangskopplung miteinander verbindet, wobei eine Betätigungseinheit (11) vorgesehen ist, die den Koppelungsteil (10) während zumindest eines Teils der Betätigung der Sattelbremse (1) antreibt, sodass der bewegliche Bremsenteil (8) dabei aufgrund der mechanischen Zwangskoppelung relativ zum ortsfesten Bremsenteil (7) verschoben wird.

2. Sattelbremse nach Anspruch 1, **dadurch gekennzeichnet, dass** die Sattelbremse (1) als Schwimmsattelbremse ausgeführt ist, mit einem Bremssattel (2) als beweglichen Bremsenteil (8) und einer Bremsscheibe (3) als Teil des ortsfesten Bremsenteils (7).

3. Sattelbremse nach Anspruch 2, **dadurch gekennzeichnet, dass** in der Sattelbremse (1) eine Sattelführung (9) vorgesehen ist, in der der Bremssattel (2) verschiebbar gelagert angeordnet ist.

4. Sattelbremse nach Anspruch 3, **dadurch gekennzeichnet, dass** zwischen der Sattelführung (9) und dem Bremssattel (2) ein Verschiebeteil (21) als Teil des ortsfesten Bremsenteils (7) verschiebbar gelagert angeordnet ist.

5. Sattelbremse nach Anspruch 4, **dadurch gekennzeichnet, dass** der Koppelungsteil (10) am Verschiebeteil (21) angeordnet ist.

6. Sattelbremse nach Anspruch 1, **dadurch gekennzeichnet, dass** die Sattelbremse (1) als Festsattelbremse mit verschiebbarer Bremsscheibe (3) ausgeführt ist, mit einem Bremssattel (2) als ortsfesten Bremsenteil (7) und einer Bremsscheibe (3) als Teil des beweglichen Bremsenteils (8).

7. Sattelbremse nach einem der Ansprüche 1 bis 6, **dadurch gekennzeichnet, dass** der Koppelungsteil (10) als Betätigungshebel (12) ausgeführt ist, der an einem ersten Anlenkpunkt (13) an einem Teil des ortsfesten Bremsenteils (7) drehbar gelagert angeordnet ist und der an einem zweiten Anlenkpunkt (14) an einem Teil des beweglichen Bremsenteils (8) drehbar gelagert angeordnet ist.

8. Sattelbremse nach Anspruch 7, **dadurch gekennzeichnet, dass** der Betätigungshebel (12) an einem dritten Anlenkpunkt (15) an der Andrückeinrichtung (6) als Betätigungseinheit (11) drehbar gelagert angeordnet ist.

9. Sattelbremse nach einem der Ansprüche 1 bis 6, **dadurch gekennzeichnet, dass** der Koppelungsteil (10) als Kurvengetriebe mit einer Abhebenocke (33) ausgeführt ist, wobei die Abhebenocke (33) über eine Erhebungskurve mit dem beweglichen Bremsenteil (8) zusammenwirkt.

10. Sattelbremse nach Anspruch 9, **dadurch gekennzeichnet, dass** die Abhebenocke (33) von der Andrückeinrichtung (6) mitangetrieben ist.

## Claims

1. Caliper brake comprising a stationary brake part (7) and a moveable brake part (8), wherein the stationary brake part (7) and the moveable brake part (8) being arranged in the caliper brake (1) so as to be moveable relative to one another, and a first brake pad (4) being arranged on a portion of the stationary brake part (7) or of the moveable brake part (8), and a pressing device (6) being provided in the caliper brake (1), on which a second brake pad (5) is provided and which moves the second brake pad (5) towards the first brake pad (4) or away from the first brake pad (4) when the caliper brake (1) is actuated, wherein at least a portion of the moveable brake part (8) or of the stationary brake part (7) being arranged between the first brake pad (4) and the second brake pad (5), wherein a coupling part (10) being provided, which is connected to the moveable brake part (8), **characterized in that** the coupling part (10) is connected to the stationary brake part (7) and couples the moveable brake part (8) and the stationary brake part (7) in a mechanical forced coupling, wherein an actuating unit (11) being provided, which drives the coupling part (10) during at least a portion of the actuation of the caliper brake (1) such that the moveable brake part (8) is moved relative to the stationary brake part (7) in the course of this, due to the mechanical forced coupling.

2. Caliper brake according to claim 1, **characterized in that** the caliper brake (1) is designed as a floating caliper brake, comprising a brake caliper (2) as the moveable brake part (8) and a brake disk (3) as a portion of the stationary brake part (7).

3. Caliper brake according to claim 2, **characterized in that** a caliper guide (9) is provided in the caliper brake (1), in which caliper guide the brake caliper (2) is moveably mounted.

4. Caliper brake according to claim 3, **characterized in that** a slide part (21), as a portion of the stationary brake part (7), is movably mounted between the caliper guide (9) and the brake caliper (2).

5. Caliper brake according to claim 4, **characterized in that** the coupling part (10) is arranged on the slide part (21).

6. Caliper brake according to claim 1, **characterized in that** the caliper brake (1) is designed as a fixed caliper brake comprising a movable brake disk (3), comprising a brake caliper (2) as the stationary brake part (7) and a brake disk (3) as a portion of the moveable brake part (8).

7. Caliper brake according to any of claims 1 to 6, **characterized in that** the coupling part (10) is designed as an actuating lever (12) that is rotatably mounted at a first point of articulation (13) on a portion of the stationary brake part (7) and that is rotatably mounted at a second point of articulation (14) on a portion of the moveable brake part (8).

8. Caliper brake according to claim 7, **characterized in that** the actuating lever (12) is rotatably mounted at a third point of articulation (15) on the pressing device (6) as the actuating unit (11).

9. Caliper brake according to any of claims 1 to 6, **characterized in that** the coupling part (10) is designed as a cam mechanism comprising a lifting cam (33), wherein the lifting cam (33) cooperating with the moveable brake part (8) via an elevation curve.

10. Caliper brake according to claim 9, **characterized in that** the lifting cam (33) is co-driven by the pressing device (6).

## Revendications

1. Frein à étrier comprenant un élément de frein fixe (7) et un élément de frein mobile (8), l'élément de frein fixe (7) et l'élément de frein mobile (8) étant disposés dans le frein à étrier (1) de manière mobile l'un par rapport à l'autre et une première garniture de frein (4) étant disposée sur une partie de l'élément de frein fixe (7) ou de l'élément de frein mobile (8) et le frein à étrier (1) incluant un moyen presseur (6) sur lequel il est prévu une seconde garniture de frein (5) et qui rapproche la seconde garniture de frein (5) de la première garniture de frein (4) ou l'écarte de la première garniture de frein (4) lors de l'actionnement du frein à étrier (1), au moins une partie de l'élément de frein mobile (8) ou de l'élément de frein fixe (7) étant disposée entre la première garniture de frein (4) et la seconde garniture de frein (5), un élément d'accouplement (10) étant prévu qui est relié à l'élément de frein mobile (8), **caractérisé en ce que** l'élément d'accouplement (10) est relié à l'élément de frein fixe (7) et relie l'élément de frein mobile (8) et l'élément de frein fixe (7) entre eux dans un accouplement mécanique forcé, une unité d'actionnement (11) étant prévue qui entraîne l'élément d'accouplement (10) pendant au moins une partie de l'actionnement du frein à étrier (1) de sorte que l'élément de frein mobile (8) est déplacé par rapport à l'élément de frein fixe (7) en raison de l'accouplement mécanique forcé.

2. Frein à étrier selon la revendication 1, **caractérisé en ce que** le frein à étrier (1) est réalisé sous la forme d'un frein à étrier flottant comprenant un étrier de frein (2) réalisé sous la forme d'un élément de frein mobile (8) et un disque de frein (3) réalisé sous la forme d'un élément de frein fixe (7).

3. Frein à étrier selon la revendication 2, **caractérisé en ce que** l'étrier de frein (1) inclut un guide d'étrier (9) qui est monté de façon coulissante dans l'étrier de frein (2).

4. Frein à étrier selon la revendication 3, **caractérisé en ce qu'**un élément coulissant (21) est monté de manière coulissante, en tant que partie de l'élément de frein fixe (7), entre le guide d'étrier (9) et l'étrier (2).

5. Frein à étrier selon la revendication 4, **caractérisé en ce que** l'élément d'accouplement (10) est disposé au niveau de l'élément coulissant (21).

6. Frein à étrier selon la revendication 1, **caractérisé en ce que** le frein à étrier (1) est conçu comme un frein à étrier fixe muni d'un disque de frein coulissant (3), d'un étrier de frein (2) en tant qu'élément de frein fixe (7) et d'un disque de frein (3) en tant qu'élément de frein mobile (8).

7. Frein d'étrier selon l'une des revendications 1 à 6, **caractérisé en ce que** l'élément d'accouplement (10) est conçu comme un levier d'actionnement (12) qui est monté de manière rotative sur un premier point d'articulation (13) au niveau d'une partie de l'élément de frein fixe (7) et qui est monté de manière rotative sur un deuxième point d'articulation (14) au niveau d'une partie de l'élément de frein mobile (8).

8. Frein à étrier selon la revendication 7, **caractérisé en ce que** le levier d'actionnement (12) est monté de manière rotative sur un troisième point d'articulation (15) au niveau du moyen presseur (6) en tant qu'unité d'actionnement (11).

9. Frein à étrier selon l'une des revendications 1 à 6, **caractérisé en ce que** l'élément d'accouplement (10) est réalisé sous la forme d'une commande à came munie d'une came de levage (33), la came de levage (33) coopérant par le biais d'un bossage avec l'élément de frein mobile (8).

10. Frein à étrier selon la revendication 9, **caractérisé en ce que** la came de levage (33) est entraînée par le moyen presseur (6).
